# DEMANDE DE BREVET EUROPEEN

(11) **EP 1 326 398 A1**
(43) Date de publication de la demande: **09.07.2003**
(21) Numéro de dépôt: 02079042.4
(22) Date de dépôt: 01.10.2002
(51) Int. Cl.: H04L 29/06

(54) **Système de transmission de paquets**

(30) Priorité: 09.10.2001 FR 0112982
(71) Demandeur: Koninklijke Philips Electronics N.V., 5621 BA Eindhoven (NL)
(72) Inventeur: Reme, Jean-Marc, c/o Société Civile S.P.I.D., 75008 Paris (FR)
(74) Mandataire: de la Fouchardière, Marie-Noelle

(57) **Abrégé**

L'invention concerne un système de transmission de séquences de paquets (RTP) d'un serveur (10) vers un terminal mobile (30). Le terminal comporte une mémoire tampon (BM) pour stocker les paquets reçus pendant un temps appelé temps de traversée de la mémoire tampon qui a une valeur minimum fixe (TT).

Le serveur comporte une mémoire de retransmission (SM) pour stocker des informations relatives à des paquets susceptibles d'être retransmis. Il comporte aussi des moyens pour effacer de cette mémoire de retransmission les informations relatives à des paquets pour lesquels la somme de l'instant de transmission, de la moitié du temps de transmission aller-retour et du temps minimum de traversée de la mémoire tampon, est inférieure à l'instant courant.

Application : transmission vidéo d'un serveur vers un terminal mobile ; RTP ; MPEG-4.

## Description

### Domaine de l'invention

L'invention concerne un système de transmission comportant au moins un serveur pour transmettre des séquences de paquets de données et un terminal pour recevoir des paquets de données, avec un temps de transmission entre ledit serveur et ledit terminal qui est variable, ledit serveur comportant une mémoire de retransmission pour stocker des informations relatives à au moins certains paquets en vue de leur éventuelle retransmission, notamment une information d'instant de transmission desdits paquets, et des moyens d'effacement d'informations contenues dans ladite mémoire de retransmission, ledit terminal comportant une mémoire tampon pour stocker les paquets reçus avant de les fournir à un dispositif de traitement de données.

L'invention concerne aussi un terminal et un serveur destinés à être utilisés dans un tel système de transmission. Elle concerne aussi un procédé de gestion d'une mémoire de retransmission destiné à être mis en oeuvre par un tel serveur.

L'invention concerne aussi un programme d'ordinateur comportant des instructions pour la mise en oeuvre d'un tel procédé de gestion d'une mémoire de retransmission, lorsqu'il est exécuté par un processeur.

L'invention concerne enfin un signal destiné à être transmis d'un tel terminal vers un tel serveur qui véhicule des informations nécessaires à la mise en oeuvre d'un tel procédé de gestion d'une mémoire de retransmission.

L'invention s'applique d'une façon générale à toute transmission par paquets au travers d'un réseau peu fiable. Elle s'applique en particulier à la transmission de données vidéo via le réseau Internet vers des terminaux de communication radio-mobile.

### Arrière plan technologique de l'invention

Un tel système de transmission est décrit dans l'article « Design and implementation of reliable protocol for video data produced in real time manner » de Teruyuli Hasegawa, Toru Hasegawa et Toshihiko Kato, publié en 1998 dans "IEEE Proceedings of 5^{th} International Conference on Real Time Computing System and Application", page 200. Cet article décrit un système de transmission par paquet au travers d'un réseau ATM, dans lequel le terminal décide d'une limite temporelle au delà de laquelle un paquet est périmé. Cette limite temporelle est égale à l'instant de transmission du paquet, plus une valeur fixe. Les paquets reçus sont stockés dans une mémoire tampon. Le terminal détecte la perte d'un ou plusieurs paquets lorsqu'il y a un trou dans la séquence des paquets reçus. Lorsque la limite temporelle est atteinte pour le premier paquet qui suit un trou, cela signifie que tous les paquets du trou sont périmés. Le premier paquet qui suit le trou est alors transmis à la couche supérieure pour traitement. Et le terminal envoie une information au serveur pour que le serveur supprime de sa mémoire de retransmission tous les paquets du trou.

Un but de l'invention est de proposer un système de transmission dans lequel la mémoire de retransmission du serveur soit gérée avec plus de précision.

### Résumé de l'invention

Ce but est atteint avec un système de transmission du type de celui qui vient d'être décrit, caractérisé en ce que les paquets sont stockés dans ladite mémoire tampon pendant un temps minimum appelé temps minimum de traversée de ladite mémoire tampon, fixé lors de la configuration dudit terminal et transmis dudit terminal vers ledit serveur, et en ce que lesdits moyens d'effacement sont prévus pour effacer de ladite mémoire de retransmission les informations relatives à un paquet lorsqu'une comparaison tenant compte de ladite information d'instant de transmission, du temps de transmission courant entre ledit serveur et ledit terminal, et du temps minimum de traversée de ladite mémoire tampon, montre que s'il était retransmis ledit paquet ne serait pas reçu à temps pour être traité par ledit dispositif de traitement.

Dans l'art antérieur précité, on utilise une valeur fixe représentative du temps de transmission des paquets sur le réseau pour décider de l'effacement des paquets dans la mémoire de retransmission. Selon l'invention au contraire, on utilise la valeur courante du temps de transmission des paquets. Ceci est particulièrement important lorsque la valeur du temps de transmission des paquets varie de façon significative. C'est en particulier le cas pour une transmission via le réseau Internet : en effet, sur le réseau Internet, le temps de transmission varie beaucoup selon le moment de la journée et la liaison considérée.

De plus, dans l'art antérieur précité, c'est le terminal qui prend la décision d'effacement d'un paquet et qui la transmet au serveur. Le coût en bande passante est donc important. Au contraire, selon l'invention, la décision d'effacement est prise directement par le serveur.

On notera que selon l'invention, il suffit de transmettre le temps minimum de traversée de la mémoire tampon une seule fois du terminal vers le serveur, au début de la communication. On notera aussi que le calcul de la valeur courante du temps de transmission des paquets nécessite des échanges d'informations sur le réseau et donc consomme de la bande passante. Mais ce calcul est de toutes les façons nécessaire pour adapter le débit du serveur à l'état du réseau Internet (si le réseau Internet est très chargé, le débit du serveur est réduit). Le mécanisme d'effacement selon l'invention n'entraîne donc aucune consommation de bande passante supplémentaire.

### Brève description des dessins

D'autres détails et avantages de l'invention apparaîtront dans la description qui va suivre en regards des dessins annexés donnés à titre d'exemple non limitatifs et dans lesquels :
- la figure 1 est un schéma d'un exemple de système de transmission selon l'invention,
- la figure 2 est un organigramme décrivant les principales étapes d'un procédé selon l'invention de gestion d'une mémoire de retransmission d'un serveur.

### Description d'un mode de réalisation préférentiel de l'invention

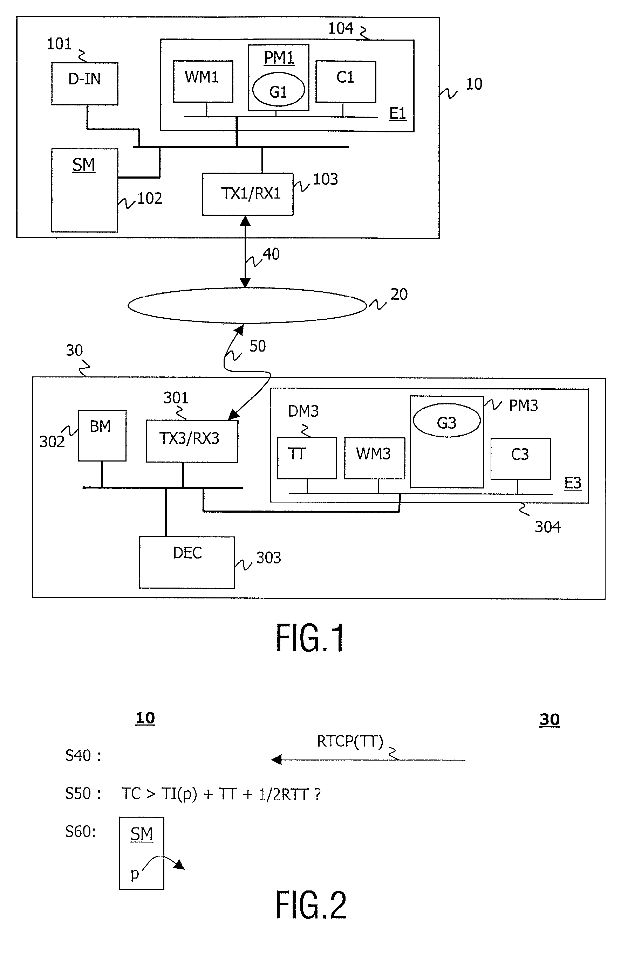

Sur la figure 1 on a représenté un exemple de système de transmission selon l'invention comportant un serveur 10, un réseau de transmission 20, et un terminal 30. Le réseau de transmission 20 est par exemple constitué par un réseau cellulaire, par exemple un réseau GPRS ou un réseau UMTS. Le serveur 10 est relié au réseau de transmission 20 par une liaison 40, par exemple une liaison faisant appel à un réseau de type paquet comme le réseau Internet. Le terminal 30 est relié au réseau cellulaire par une liaison radio 50.

Le serveur 10 comporte une source de données D-IN représentée par un bloc 101, une mémoire de retransmission SM représentée par un bloc 102, un dispositif de transmission / réception TX1/RX1 représenté par un bloc 103, et un ensemble à microprocesseur E1 représenté par un bloc 104. L'ensemble à microprocesseur E1 comporte une mémoire de travail WM1, une mémoire de programmes PM1 et un processeur C1. La mémoire de programme PM1 contient un programme ou un ensemble de programmes G1 contenant des instructions de code de programme pour la mise en oeuvre d'un procédé selon l'invention de gestion de la mémoire de retransmission SM.

Le terminal 30 comporte un dispositif de transmission / réception TX3/RX3 représenté par un bloc 301, une mémoire tampon BM représentée par un bloc 302, un dispositif de traitement DEC représenté par un bloc 303, et un ensemble à microprocesseur E3 représenté par un bloc 304. L'ensemble à microprocesseur E3 comporte une mémoire de travail WM3, une mémoire de programmes PM3, une mémoire de données DM3 et un processeur C3. La mémoire de programme PM3 contient un programme G3 contenant des instructions de code de programme pour la mise en oeuvre d'un procédé selon l'invention de gestion de la mémoire de retransmission SM.

Les données délivrées par la source de données D-IN sont par exemple des données vidéo codées au format MPEG-4. Dans ce cas, la source de données D-IN comporte une source de séquences vidéo et un codeur de type MPEG-4. Et le dispositif de traitement DEC est un décodeur de type MPEG-4.

La transmission entre le serveur 10 le terminal 30 se fait avantageusement en utilisant un protocole de transport du type RTP. Le protocole de transport RTP est décrit dans le document RFC1889 publié par l'IETF.

La liaison radio 50 est par nature peu fiable. Elle introduit des erreurs de transmission. La retransmission d'au moins certains paquets perdus, sur requête du récepteur, est une façon d'améliorer la qualité des données reçues. Pour cela, le terminal 30 doit détecter les paquets de données perdus et transmettre au serveur 10 des requêtes en retransmission relatives à au moins certains paquets perdus.

Les données utiles sont transmises du serveur 10 vers le terminal 30 dans des paquets de données du type décrit au paragraphe 5 de la RFC 1889. Ces paquets comprennent notamment :
- un champ « Sequence Number » : le numéro de séquence SN contenu dans ce champ est incrémenté d'une unité à chaque fois qu'un paquet de données est transmis. Il est destiné à être utilisé à la réception pour détecter la perte d'un ou plusieurs paquets de données dans une séquence de paquets de données. Par exemple, lorsque le terminal 30 reçoit un paquet dont le numéro de séquence est 36, suivi d'un autre paquet dont le numéro de séquence est 40, il en déduit que les paquets qui contenaient les numéros de séquence 37, 38 et 39 ont été perdus.
- un champ « Payload» : le champ « Payload » contient les données utiles c'est-à-dire, dans l'exemple décrit ici, des données codées au format MPEG-4.

Pour permettre la retransmission d'un paquet, il est nécessaire de stocker les champs «Sequence Number» et «Payload» dans la mémoire de retransmission SM du serveur 10, ainsi que l'instant TI(p) de transmission du paquet (l'instant TI(p) de transmission du paquet est l'instant auquel le paquet p est transmis pour la première fois).

Les requêtes en retransmission sont transmises du terminal 30 vers le serveur 10 dans des paquets de contrôle du type RTCP décrits au paragraphe 6 de la RFC1889.

Un terminal 30 selon l'invention reçoit des paquets transmis en séquence par un serveur 10, stocke les paquets reçus dans sa mémoire tampon BM, et extrait les paquets stockés dans la mémoire tampon BM pour les fournir au dispositif de traitement DEC après un certain temps de traversée de la mémoire tampon. Le temps de traversée de la mémoire tampon a une valeur minimum TT stockée dans la mémoire de données DM3 du terminal lors de la configuration du terminal. Le fait d'imposer un temps minimal de traversée de la mémoire tampon permet de garantir que la mémoire tampon ne sera jamais vide lorsque le réseau fonctionne normalement, c'est-à-dire que le dispositif de traitement DEC sera continûment alimenté en paquets à traiter. Ce temps minimal de traversée de la mémoire tampon est par exemple de l'ordre de 3s.

Sur la figure 2, on a représenté les principales étapes d'un procédé de gestion de la mémoire de retransmission du serveur 10. D'après la figure 2, un tel procédé comporte :
- une étape S40 mise en oeuvre par le terminal 30 au début de chaque nouvelle communication avec le serveur 10, qui consiste pour le terminal 30 à transmettre au serveur 10 la valeur minimale TT du temps de traversée de sa mémoire tampon BM.
- une étape S50 mise en oeuvre régulièrement par le serveur 10, qui consiste à vérifier pour les paquets contenus dans sa mémoire de retransmission SM si l'instant courant TC est supérieur à la somme de la moitié du temps RTT de transmission aller-retour sur le réseau, du temps minimum TT de traversée de la mémoire tampon et de l'instant TI(p) de transmission du paquet p considéré.
- les paquets pour lesquels TC>TI(p)+1/2RTT+TT sont effacés de la mémoire de retransmission SM à l'étape S60.

Le temps RTT de transmission aller-retour sur le réseau 20 est calculé régulièrement par le serveur 10. Pour cela, le serveur 10 envoie au terminal 30 un message RTCP de type SR (de l'anglais Sender Report) tel que décrit au paragraphe 6.3.1 de la RFC 1889, ayant un numéro de séquence égal à 1, et dont le champ « NTP Timestamp » indique l'instant d'émission T1 du message. Ce message est stocké par le serveur 10. Sur réception de ce message, le terminal 30 note l'instant d'arrivée T2 du message, et renvoie un message RTCP de type RR (de l'anglais Receiver Report) dont le numéro de séquence est égal à 1, et dont le champ « DLSR » contient la différence entre l'instant d'arrivée T2 du message émis par le serveur 10 et l'instant d'émission T3 de la réponse du terminal 30. Le serveur 10 reçoit cette réponse à l'instant T4 et il calcule le temps de transmission aller-retour sur le réseau de la façon suivante : RTT= T4-T1-T3+T2.

La valeur du temps de transmission aller-retour sur le réseau étant susceptible de varier de façon importante au cours du temps, il est avantageux de la recalculer très régulièrement.

En revanche, comme la valeur minimum du temps de traversée de la mémoire tampon est fixe, il suffit de l'envoyer une seule fois du terminal 30 vers le serveur 10, au début de la communication. Par exemple cette valeur est transmise sous forme de paramètre applicatif («profile specific extension») dans le premier message de réponse transmis par le terminal 30 au serveur 10 lors du premier calcul du temps de transmission aller-retour sur le réseau.

## Revendications

1. Système de transmission comportant au moins un serveur (10) pour transmettre des séquences de paquets de données et un terminal (30) pour recevoir des paquets de données, avec un temps de transmission (1/2 RTT) entre ledit serveur et ledit terminal qui est variable, ledit serveur comportant une mémoire de retransmission (SM) pour stocker des informations relatives à au moins certains paquets en vue de leur éventuelle retransmission, notamment une information d'instant de transmission desdits paquets (TI(p)), et des moyens d'effacement d'informations contenues dans ladite mémoire de retransmission, ledit terminal comportant une mémoire tampon (BM) pour stocker les paquets reçus avant de les fournir à un dispositif (DEC) de traitement de données,
**caractérisé en ce que** les paquets sont stockés dans ladite mémoire tampon pendant un temps minimum appelé temps minimum de traversée de ladite mémoire tampon (TT) fixé lors de la configuration dudit terminal et transmis dudit terminal vers ledit serveur, et **en ce que** lesdits moyens d'effacement sont prévus pour effacer de ladite mémoire de retransmission les informations relatives à un paquet lorsqu'une comparaison tenant compte de ladite information d'instant de transmission (TI(p)), du temps de transmission courant entre ledit serveur et ledit terminal (1/2 RTT), et du temps minimum de traversée de ladite mémoire tampon (TT), montre que s'il était retransmis ledit paquet ne serait pas reçu à temps pour être traité par ledit dispositif de traitement.

2. Terminal (30) destiné à recevoir des paquets de données transmis en séquence par un serveur qui est doté d'une mémoire de retransmission pour stocker des informations relatives à au moins certains paquets en vue de leur éventuelle retransmission et de moyens d'effacement d'informations contenues dans ladite mémoire de retransmission, ledit terminal comportant une mémoire tampon (BM) pour stocker les paquets reçus avant de les fournir à un dispositif de traitement de données (DEC), **caractérisé en ce que** les paquets sont stockés dans ladite mémoire tampon pendant un temps minimum appelé temps minimum de traversée de la mémoire tampon (TT), fixé lors de la configuration dudit terminal, et transmis dudit terminal vers ledit serveur, ledit temps minimum de traversée de la mémoire tampon étant destiné à être pris en compte par lesdits moyens d'effacement d'informations contenues dans ladite mémoire de retransmission.

3. Serveur (10) destiné à transmettre des séquences de paquets de données à un terminal (30), avec un temps de transmission (1/2 RTT) entre ledit serveur et ledit terminal qui est variable, ledit serveur comportant une mémoire de retransmission (SM) pour stocker des informations relatives à au moins certains paquets en vue de leur éventuelle retransmission, notamment une information d'instant de transmission desdits paquets (TI(p)), et des moyens d'effacement d'informations contenues dans ladite mémoire de retransmission,
**caractérisé en ce que** ledit terminal comportant une mémoire tampon (BM) pour stocker les paquets reçus pendant un temps minimum, appelé temps minimum de traversée de la mémoire tampon (TT), avant de les fournir à un dispositif (DEC) de traitement de données, ledit temps minimum de traversée de la mémoire tampon étant fixé lors de la configuration du terminal et transmis dudit terminal audit serveur, lesdits moyens d'effacement sont prévus pour effacer de ladite mémoire de retransmission les informations relatives à un paquet lorsqu'une comparaison tenant compte de ladite information d'instant de transmission (TI(p)), du temps de transmission courant entre ledit serveur et ledit terminal (1/2 RTT), et du temps minimum de traversée de ladite mémoire tampon (TT), montre que s'il était retransmis ledit paquet ne serait pas reçu à temps pour être traité par ledit dispositif de traitement.

4. Procédé de gestion d'une mémoire de retransmission (SM) d'un serveur (10) destiné à transmettre des séquences de paquets de données à un terminal (30) avec un temps de transmission (1/2 RTT) entre ledit serveur et ledit terminal qui est variable, ladite mémoire de retransmission étant prévue pour stocker des informations relatives à au moins certains paquets en vue de leur éventuelle retransmission, notamment une information d'instant de transmission desdits paquets (TI(p)), ledit procédé comportant une étape d'effacement d'informations contenues dans ladite mémoire de retransmission, **caractérisé en ce que** ledit terminal comportant une mémoire tampon (BM) pour stocker les paquets reçus pendant un temps minimum appelé temps minimum de traversée de la mémoire tampon (TT) avant de les fournir à un dispositif (DEC) de traitement de données, ledit temps minimum de traversée de la mémoire tampon étant fixé lors de la configuration dudit terminal et transmis audit serveur, ladite étape d'effacement consiste à effacer de ladite mémoire de retransmission les informations relatives à un paquet lorsqu'une comparaison tenant compte de ladite information d'instant de transmission (TI(p)), du temps de transmission courant entre ledit serveur et ledit terminal (1/2 RTT), et du temps minimum de traversée de ladite mémoire tampon (TT), montre que s'il était retransmis ledit paquet ne serait pas reçu à temps pour être traité par ledit dispositif de traitement.

5. Programme comportant des instructions pour la mise en oeuvre d'un procédé selon la revendication 4 de gestion d'une mémoire de retransmission, lorsqu'il est exécuté par un processeur.

6. Signal (RTCP(TT)) destiné à être transmis d'un terminal selon la revendication 2 vers un serveur selon la revendication 3, **caractérisé en ce qu'**il véhicule la valeur du temps minimum de traversée de la mémoire tampon dudit terminal.
